# EUROPEAN PATENT APPLICATION

(11) **EP 0 625 758 A1**
(43) Date of publication of application: **23.11.1994**
(21) Application number: 94300701.3
(22) Date of filing: 31.01.1994
(51) Int. Cl.: G06F 15/419, G06F 15/38

(54) **Natural language processing system**

(30) Priority: 21.04.1993 GB 9308240
(71) Applicant: International Business Machines Corporation, Armonk, N.Y. 10504 (US)
(72) Inventor: Sharman, Richard, Southampton, Hampshire SO2 1DU (GB)
(74) Representative: Davies, Simon Robert

(57) **Abstract**

A B-tree 21 is used to store natural language data, for example as part of a speech recognition or speech synthesis system. The B-tree is arranged in a hierarchy, with each node pointing to two nodes in the level below. Each node contains a test value (a word), and data relating to that test value (or a reference to a storage location where the data is maintained). The data is accessed by starting at the top of the tree and comparing the desired word with the test value for that node. Depending on the relative alphabetical ordering of the desired word and the test value, the appropriate branch from that node is followed. This process is continued down the tree until a test value corresponding to the desired word is located. The B-tree is arranged so that frequency of occurrence of the test values in natural language decreases substantially monotonically as the tree is descended.

## Description

The present invention relates to a natural language processing system including a B-tree structure.

There are many applications in which it is necessary to store some form of dictionary of words for automatic processing. For example, in a voice response system, the entry for each word might be a digital recording of that word. Thus if the system was being used to speak out or articulate a text passage, the dictionary would be referred to as each word in the text was encountered in order to obtain the correct pronunciation.

A corresponding situation also occurs in an automated speech recognition system. As a first stage in such a system, incoming sounds are converted into words. However, it is often not possible to identify the word exactly, either because it was not pronounced distinctly enough, or because close or even exact homophones exist (eg "too" and "two"; "guessed" and "guest"). In such circumstances, it is necessary to utilise additional information held in the dictionary - for example, testing the relative frequency of the candidate words, or their context, based on preceding words or some grammatical model. Thus in this example each dictionary entry might hold information about the frequency of that word compared to other words, and possibly about the sort of words that typically precede that entry in normal text. There are many other applications where such a dictionary would also be valuable, for example in a spell-checking facility, or in an automatic translation system, and so on.

In natural language (ie language as used in normal communications), the number of words can easily run into hundreds of thousands (words such as "walk", "walks", walked", "walking" all need individual entries). This leads to the technical problem of how to store the dictionary in a machine. Since many of the applications described above need to operate in real-time, there is a particular requirement to minimise access time to individual dictionary entries.

There is a considerable literature on database storage: eg "An Introduction to Database Systems: Vol 1", by C J Date, Addison Wesley, 1990 (5th edition), "Database System Concepts", by H F Korth and A Silberschatz, McGraw-Hill, 1991 (2nd edition), and "Algorithms + Data Structures = Programs", by N Wirth, Prentice Hall, 1976. The two most commonly employed access schemes are (i) a hashing technique, and (ii) a B-tree. In hashing, the storage location of a record (in our context, a record corresponds to an entry in the dictionary), is determined by an algebraic or arithmetic mapping of some key value. This approach works best when the key values are evenly distributed in the virtual key space. Consider for example, a set of employee records stored on the basis of personnel number. If there are relatively few unused personnel numbers, up to the maximum assigned personnel number, then it is straightforward to store each employee record at a memory location determined by hashing the personnel number. Access to the data then becomes very fast, since for any given personnel number, the storage location of the corresponding employee record can be determined immediately on the basis of the hashing technique employed, and the data accessed accordingly.

The hashing approach however is difficult to apply to a language dictionary, since the distribution of words within the available space of possible words is highly clustered. For example, there are many more words (in English) beginning with the letter "s" than with "x", but within a standard bashing technique, the same number of memory locations might be assigned to both initial letters. This clearly leads to some empty memory locations and/or potential collisions, and a very inefficient use of storage space. Although some techniques are available to improve the hashing approach in such circumstances, the modifications are complicated and do not save storage space without a considerable sacrifice in flexibility.

The second approach is to use a B-tree, which is a hierarchical data structure (a "tree"). At the top of hierarchy is a "root node" which contains a first test: value. If the desired identifier is above the test value (eg in numerical value), a first branch of the hierarchy is to be followed, whereas if the desired identifier is below the test value a second branch is followed. These two branches lead to a pair of nodes in the next level down the hierarchy, which again each contain a test value. A pair of branches then leads down from each node at this level, and so overall the tree splits into four branches. This process is followed down to the bottom of the hierarchy. The nodes in the B-tree can be used to store information themselves, and/or can contain a pointer into an associated database (in which case the B-tree acts effectively as an index). In some B-trees only the lowest layer of the hierarchy (the "leaf nodes") contain such information or pointers, whereas in other B-trees each node stores information or a pointer appropriate to its particular test value.

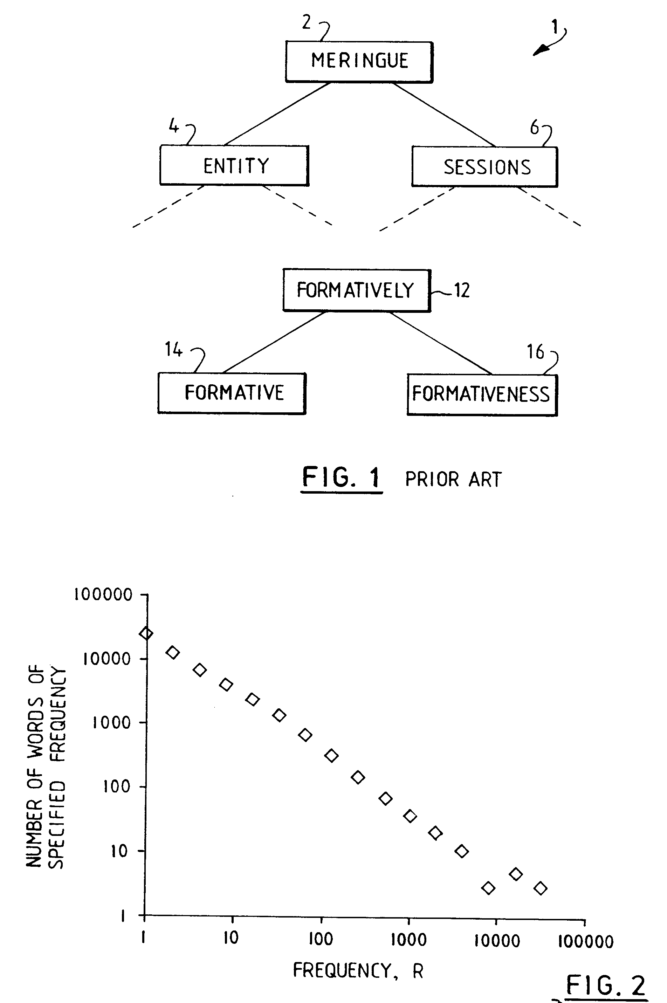

Figure 1 illustrates an example of a B-tree 1 in relation to a natural language dictionary. The root node 2 at the top of the tree is "MERINGUE". If the word to be located is before "MERINGUE" in the alphabet, then the branch to node 4 ("ENTITY") is followed, otherwise the branch to node 6 ("SESSIONS") is followed. If the word to be located is actually "MERINGUE" itself, then node 2 contains the required dictionary entry, or a pointer to where it is stored, and no further access into the hierarchy is required. Thus each node stores information or a pointer (or both) for the test value contained by that node. There are many intermediate layers of hierarchy that have been omitted from Figure 1, but the bottom two layers of the hierarchy are shown for one branch. Nodes 14 and 16 ("FORMATIVE" and "FORMATIVENESS" respectively) are at the bottom of the tree and do not have further branches depending from them.

An important property of a B-tree is that it should be balanced (indeed, "B-tree" is often regarded as short for "balanced tree"). This implies that for each node in the hierarchy the two dependent branches represent approximately equal numbers of lower level nodes. Thus in the context of Figure 1, half the dictionary entries come before "MERINGUE" at node 2, and half come after this word. Likewise, "ENTITY" and "SESSIONS" represent the quarter and three-quarter points in the dictionary respectively. This ensures the tree has a uniform depth in terms of the distance of the nodes at the bottom of the hierarchy from the root node, and helps to reduce the number of comparisons that must be made on average to locate an arbitrary word in the B-tree. There are standard algorithms available to maintain a B-tree in a balanced condition as nodes are added and deleted to the tree (see the above references).

The B-tree described above is binary, in that each node contains a single test value, representing a choice between two branches, but other forms of B-tree are also possible. For example, in a ternary B-tree, each node contains two test values, representing a choice between three possible branches (leading to three different nodes in the next level of the hierarchy). Such a ternary B-tree would still be balanced by ensuring that each branch from any given node represents the same number of lower level nodes. Moving to higher bases reduces the depth of the B-tree, at the expense of greater processing requirements at each node.

However, there are problems in using a conventional B-tree to access a natural language dictionary, since the frequency of access for different words in the B-tree is very variable. Very common words such as "THE" which need to be accessed frequently may perhaps be located at the bottom of the hierarchy, depending on their position within the total word list. By contrast, much less common words (eg "MERINGUE" in Figure 1) are accessed quickly if they happen to be high up the hierarchy.

The use of another form of B-tree to count the frequency of words in a passage of natural language text is described in "The C Programming Language" by Kernighan and Ritchie, Prentice Hall, 1988 (second edition), on page 139-140. In this example the B-tree structure is determined by the order in which the words are encountered in the text. As recognised by the authors, such a straightforward approach may lead to the tree becoming highly unbalanced. The algorithm proposed is not suitable for large volumes of text.

Thus there is a technical problem in that neither of the standard approaches - hashing or a B-tree - permits satisfactorily fast access to machine-stored natural language data without very inefficient use of storage space.

Accordingly, the invention provides a natural language processing system including a B-tree formed from a hierarchy of nodes, each node containing at least one test word and storing or referencing data associated with the test word(s), and each node (except at the bottom of the hierarchy) referencing a plurality of nodes in the next level down the hierarchy,
and characterised in that the nodes are arranged such that in descending down a branch of the B-tree, the frequency of occurrence in natural language of the test word(s) in the nodes decreases substantially monotonically.

It has been found that such a B-tree provides a much faster mean access time than a conventionally balanced tree. This is because very common words such as "the" are located at the top of the tree, and so can be accessed very quickly. Although the number of levels in the tree is increased for some branches compared to a conventionally balanced tree, the words at the bottom of these branches occur so rarely that they have relatively little impact on the average access tiem.

In a preferred embodiment, the B-tree has a binary structure, each node containing a single test value. Binary B-trees have the most layers, and so there is most scope for reducing the need to access multiple layers. Nevertheless, there is no reason why the same principles could not be used with higher bases. For example, a ternary B-tree could be produced, in which the root node contains the two most common words, with three branches down to the next layer of the hierarchy, and so on down the tree.

It is also preferred that for any pair of first and second nodes having a substantially equal frequency of occurrence in natural language, in which the first node references the second one in the next lower level of the hierarchy, the relative positions of the first and second nodes are arranged to optimise balancing of the tree. Such conventional B-tree balancing is thus only invoked if it does not compromise the frequency ordering.

In such applications it is advantageous for each test word in a node to reference a secondary B-tree, the secondary B-tree also being frequency ordered and storing information on the frequency of occurrence in natural language of bigrams containing said test word. A typical example of such an application would be speech recognition, where the relative frequencies of bigrams can be used to discriminate between different possibilities for different individual words. The use of primary and secondary trees is much more efficient in terms of space than for example storing this information in a very large two-dimensional matrix arrangement. Furthermore, since the secondary B-trees are also frequency ordered, they too benefit from fast access. The system can be readily extended to include trigrams, and even higher combinations, if each node in the secondary B-tree references yet another B-tree (in fact for speech recognition, a trigram based system has proved optimal).

In systems which do contain a secondary B-tree it is preferred that the secondary B-tree stores each test word in the form of a reference back to node in the primary B-tree containing the same test word. This obviates the need to store long words twice, and can also be utilised to chain probabilities together for whole sequences of words.

The invention also provides a method of creating a B-tree for use in a natural language processing system, the B-tree comprising a hierarchy of nodes, each node containing a test word and storing or referencing data associated with that test word, and each node (except at the bottom of that branch of the hierarchy) referencing a plurality of nodes in the next level down, said method comprising the steps of:
locating a search word within the B-tree, and if a node is found whose test word matches the search word, modifying the data for that node, and if the search word is not found, adding a new node having the search word for its test word at the bottom of the B-tree; and
returning out of the tree from the matched or newly added node by ascending a level at a time, and at each level comparing the current node with the node just ascended from according to predetermined criteria, and if said predetermined criteria are met, rearranging the branch of the tree containing said current node,
and characterised in that said predetermined criteria comprise whether the frequency of occurrence in natural language of the test word of the current node is less than that of the test word in the node just ascended from.

This method of constructing a B-tree is therefore analogous to the standard formation of a B-tree, but with nodes being arranged according to frequency criteria, rather than conventional balancing considerations. In view of the probability distribution of natural language data, this results in a substantial decrease in mean access time to the nodes. At any given time during its construction the B-tree reflects the frequencies of words in the input text so far. This means that the benefit of fast access is obtained even as new words are being added to the B-tree during this construction process.

It should be appreciated that such a method is not the only way to produce a frequency ordered B-tree. It is quite plausible to use a conventional B-tree to count word occurrences, and after the relative frequencies have been finalised, a tree arrangement established that reflects these frequencies. However, such alternative methods do not benefit from the faster access during formation as described above.

It is preferred that if the frequency of occurrence in natural language of the test word of the current node and of the test word of the node just ascended from are substantially equal, said predetermined criteria further comprise the disparity between the relative depths of the different branches depending from the current node. This corresponds to balancing in the conventional sense, as described above, and is performed if it does not compromise the frequency order of the tree.

An embodiment of the invention will now be described by way of example with reference to the following drawings:
Figure 1 as discussed above illustrates a prior art balanced B-tree for storing natural language data;
Figure 2 is a graph illustrating the frequency distribution of words in natural language data;
Figure 3 is a schematic diagram of a frequency-ordered B-tree according to the invention;
Figure 4 is a flow chart of a program for producing the B-tree of Figure 3;
Figure 5 illustrates a rearrangement of a B-tree as in Figure 3 to maintain frequency ordering;
Figure 6 illustrates a conventional rearrangement of a B-tree to perform a balancing operation;
Figure 7 illustrates a node entry if a two- (or higher) dimensional B-tree is being used; and
Figure 8 illustrates a modified node entry suitable for use with a two-dimensional B-tree.

The conventional balanced B-tree of Figure 1 is an optimum structure if the data entries are to be accessed in a random fashion. However, this condition does not apply to natural language data, which has a highly skewed distribution: a few words are accessed very frequently, whilst many words are accessed very rarely. The frequency distribution of natural language data is shown in Figure 2 and can be approximated by the expression: P(wᵢ)=0.1/i, (known as "Zipf's law"), where i represents the rank of a word wᵢ in terms of frequency, and P(wᵢ) is the probability of the word wᵢ (nb the expression should only be treated as an approximation since it sums to greater than one after some 12,000 words: a more accurate expression has been provided by Mandelbrot). The performance of a traditional B-tree structure for such skewed data is no longer optimal.

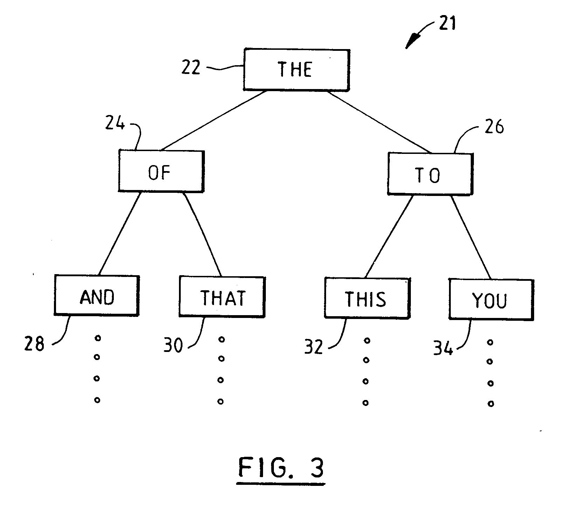

In such circumstances, it has been found that the overall or expected access time can be minimised by radically altering the structure of the B-tree. The new arrangement is illustrated in Figure 3, which depicts a set of nodes each representing a word, in which the location of nodes in the hierarchy is determined on the basis of relative frequency, not according to conventional balancing criteria.

Thus in Figure 3 the root node is "THE", which is the most frequently occurring word in the English language, although clearly far from being in the middle alphabetically. In the level below "THE" is "OF", the most common word that is alphabetically before "THE", and "TO", the most common word that is after "THE". This structure is followed on down through the hierarchy, with the most uncommon words at the greatest depth (not shown). It should be appreciated that the depth of the different branches will not be uniform, this being a direct consequence of not balancing the tree. It is also important to note that the frequency ordering only holds within any given branch, so that comparisons cannot be made between branches. For example, "AND" is in fact more common than "TO", but is situated at a lower level in the hierarchy due to the alphabetical ordering placing them in different branches of the tree.

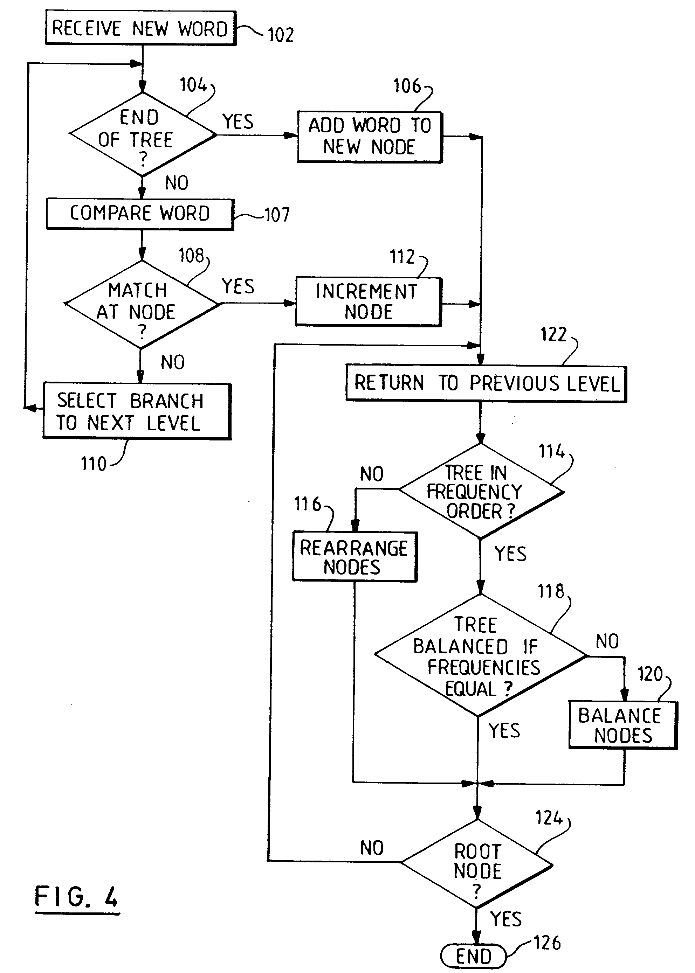

Figure 4 is a flow chart depicting the formation of a B-tree as shown in Figure 3. A C program for implementing this process is listed in Appendix A. The method of Figure 4 produces a B-tree listing the count of each word in a passage of text. This is the same task as performed in the example in "The C Programming Language" book referred to earlier, but the structure of the resulting B-tree is significantly different.

Turning to Figure 4 in detail, as text or some other source of words is scanned in, new words are presented sequentially to the process (step 102). In terms of the code in Appendix A, this represents calling the function "lx_add". The arguments of this function are "p", a structure which effectively represents a node, and which initially is set to the root node at the top of the tree, "word", the word string to be located, and "frq", the amount by which the frequency of "word" is to be incremented (usually "frq" will equal one, but it is easy to conceive of situations, such as merging two frequency lists, where the added generality would be beneficial). The remaining argument, "wordptr" will be discussed later.

The first step (104) of lx_add is to check to see if the end of the tree has been reached (ie testing "p=null"). If this is the case, a new node must be created (step 106), containing appropriate information about the word and frequency. In lx_add this is represented by calling the function lx_new (not listed), and subsequently returning a value of p corresponding to the newly added node.

If the end of the tree has not been reached, "word" is compared with the test value of the current search node (step 107). In lx_add, this corresponds to obtaining a value for "cmp", which is positive if "word" is alphabetically before the test value of the node represented by p, negative if "word" is alphabetically after this test value, and zero if "word" exactly matches this test value (the calculation of cmp is discussed in more detail below). In the case of a match (cmp=0), corresponding to step 108, the frequency counter for that node (ie p->freq) is incremented by frq, the additional number of occurrences of the word, see step 112. Again, a value of p representing the updated node is returned.

If no match is found, then the search descends to the next level of the tree (step 110), by calling lx_add recursively. The routine determines which branch to select ("p->left" or "p->right") according to the alphabetical ordering of the word to be added relative to the test value for that node: ie if cmp is positive, the left branch is taken, whilst if cmp is negative, the right branch is taken. The components p->left and p->right, which represent the dependent nodes from p, are themselves structures representing nodes. The selected one of p->left or p->right for the next iteration (another recursion of lx_add) then becomes the new value of p, representing the new current node. The recursive calling of lx_add (corresponding to to the iteration loop from step 110) continues until either a node is matched, or the bottom of the tree is reached and a new node added.

It should be appreciated that so far lx_add essentially follows prior art techniques, eg as given in the Kernighan and Ritchie reference, or used for a conventional balanced B-tree, in order to locate the correct position in the tree, and increment or create a node accordingly. It is on return from the incremented or created node that the process diverges from known methods. During the return processing, each recursion of lx_add returns to a higher level of the tree (step 122) until the root node is reached. At each step up the tree, a test for frequency ordering is made (step 114) by comparing the frequency of the current node (p->freq) with that of the node just returned from (p->left->freq or p->right->freq as appropriate). If the current node has a lower count than the node returned from in the next level down, then these nodes must be rearranged (step 116).

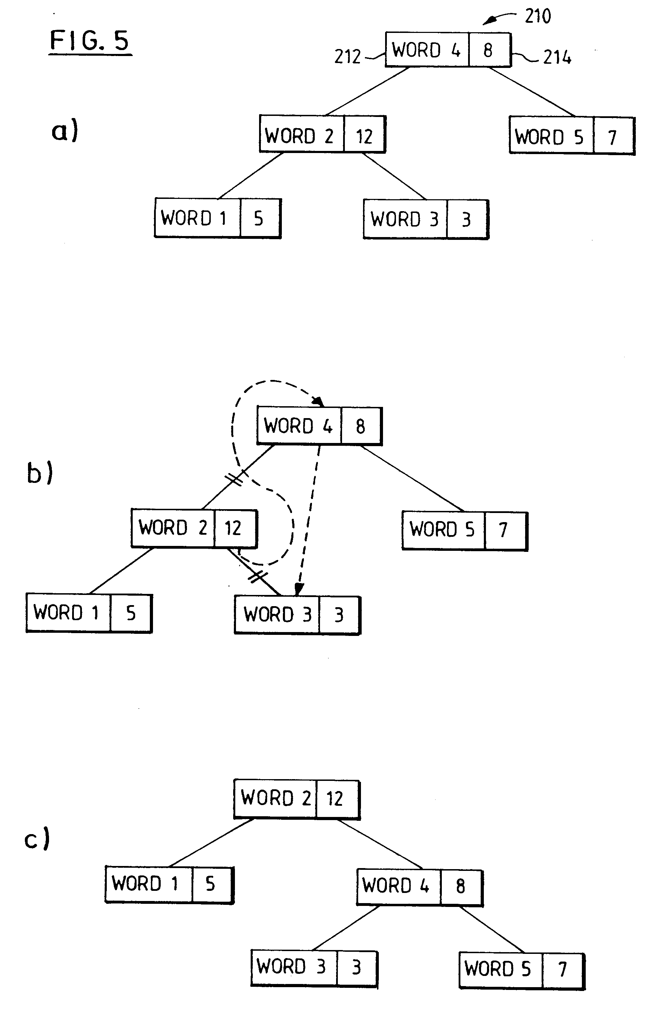

The rearrangement process is illustrated in Figure 5, which shows nodes forming part of a tree (the tree may extend above, and/or below the depicted nodes). Each node 210 contains a test value 212 ("WORD1", etc) and its associated frequency 214, as well as pointers to the branch nodes in the level immediately below (these pointers are illustrated diagramatically by the lines connecting different nodes). The test values "WORD1", "WORD2".. etc are numbered according to alphabetical order. Clearly the part of the tree containing WORD2 in Figure 5a is out of frequency order. WORD2 may have changed its frequency either because it was the word that has just been incremented, if this is the first iteration, or as the result of a frequency reordering involving WORD1 or WORD3 in the preceding iteration. In terms of lx_add p currently points to WORD1 and p->left and q to WORD2.

The rearrangement of the nodes occurs relatively simply by deleting the links shown with two lines through in Fig 5b, and adding the two links shown in dotted lines. Thus the right branch from WORD2 is moved from WORD3 to WORD4, and the left branch from WORD4 is moved from WORD2 to WORD3. This resulting structure is shown in Figure 5c. It is the structure corresponding to WORD2 (q) that is then returned to the next iteration. The mechanism used to implement the reordering is in fact closely analogous to mechanisms used in conventional B-tree balancing: the important distinction lies in the criteria used to decide when to reorder, rather than in how the reordering itself is actually performed.

The method of Figure 4 benefits itself from the fact that the B-tree being produced is frequency ordered, since each node update requires an access to the B-tree. As an indication of the advantage of a frequency ordered B-tree in this context, an implemention of the method of Figure 4 on a workstation took 10 minutes to scan a text of 50 million words, producing a final B-tree containing a vocabulary of 0.5 million words, as against 10 hours using prior art techniques on the same hardware. Comparable savings in time are achievable for other utilisations of a frequency ordered B-tree.

An added feature of the method of Figure 4 is that if two nodes have equal frequency, then their relative positions are determined according to conventional balancing considerations (steps 118, 120). This is particularly likely at the lower levels of the tree, since here there are a large number of words that occur rarely (eg typically only one or two occurrences in the input text). By contrast, the frequencies at the top of the tree are relatively well spaced in accordance with Zipf's law. The result of this probability distribution tends to be in practice therefore that for each branch in the B-tree there is a level above which no balancing occurs, and below which the branch is substantially fully balanced (the whole branch being frequency ordered of course).

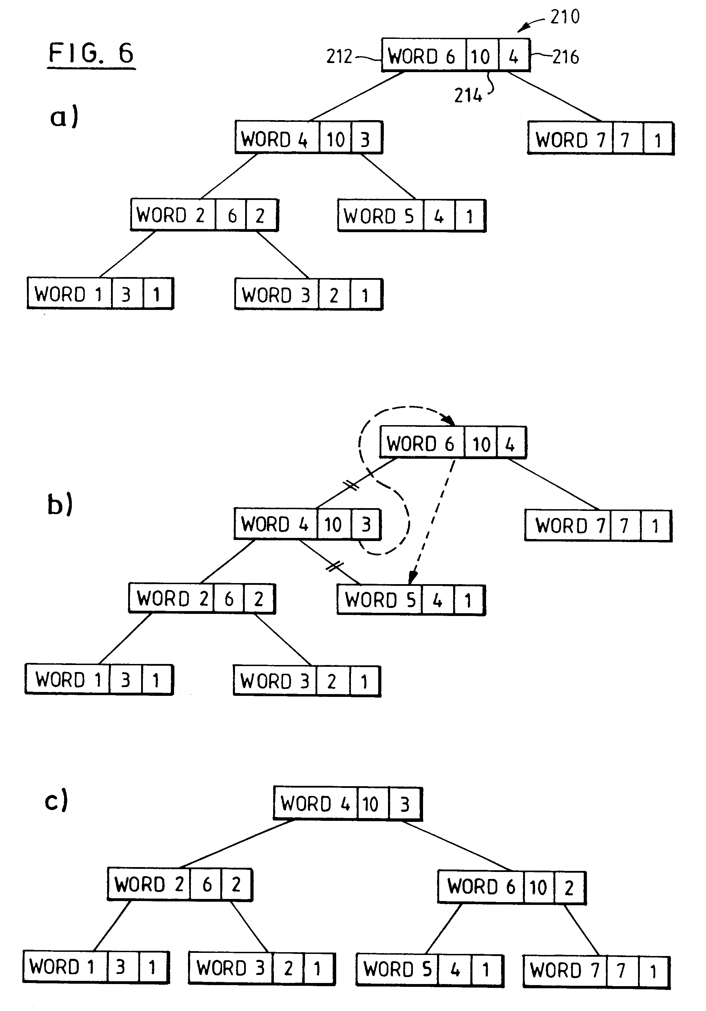

Conventional balancing in the case of equal frequencies is illustrated in Fig 6, which shows the bottom of a branch of the tree containing WORD1, WORD2, etc, (again numerical order corresponds to alphabetical order). Each node, in addition to its test value 212 and frequency 214 also stores a depth value 216. Note that depth here is measured up from the bottom of the tree, not down from the top of the tree. The depth of the node is always one greater than the greatest depth of a node beneath it (thus the depth of WORD4 is one greater than WORD2, not WORD6).

The code to perform the balancing for nodes of equal frequencies is at the end of lx_add. This portion of code is only relevant if the nodes concerned are already in frequency order (otherwise a rearrangement will have been performed, and a return encountered). The function "lx_set_depth" is called, which simply returns the difference in depth between the left dependent node and the right dependent node. For the branch in Fig 6a, this subtracts the depth of WORD4 from that of WORD7, to return a value 2 for "balance". Since this is greater than 1, the left branch is too deep (note that if the difference in depth is only 1, there will be no benefit from rebalancing, since it will simply swap which branch has the greater depth). Rebalancing is only performed if the tree will still be in frequency order - this effectively requires that WORD4 and WORD6 have equal frequency. This being the case in Figure 6, the rebalancing operation is performed in a conventional manner, as shown in Figures 6b and 6c (the steps are analagous to those of Figure 5).

Clearly for each node rearrangement, whether for frequency ordering or balancing, it is necessary to update the depth information in the nodes concerned. This is performed by the routine lx_set_depth, which interrogates the depth of the nodes in the next level down the tree (under the new arrangement) and sets the depth of the node concerned accordingly (the return value of lx_set_depth in this case can be ignored). If a new node is being added at the bottom of the tree, then by definition this has a depth of one.

The method of Figure 4 produces a frequency ordered B-tree for natural language data. This B-tree structure can then be replicated and the nodes used to store information directly, or alternatively to contain a reference to other information (eg an electronic pronunciation library). Depending on the desired use, actual frequencies of the nodes in the B-tree need not be stored (this would only be desirable if updating the B-tree structure with additional frequency information were contemplated).

A particular use of a frequency ordered B-tree for storing natural language data is in a speech recognition system. As mentioned in the introduction, one method of distinguishing between homophones, or other words not definitely identified phonetically, is to look at the relative frequency of the different candidates. Thus if the sound corresponding to "to", "too" or "two" is detected, then a priori "to" is the most likely interpretation since it is the most common word out of the three possibilities. For such an application, the B-tree must store information about the relative frequencies of different words (of course the method of Figure 4 produces such a B-tree directly).

A more sophisticated approach than looking at single word probabilites, is to consider the relative frequency of groups of words, typically pairs or triplets of words (known as "bigrams" or "trigrams"). Thus if the sound "to", "two", or "too", is followed by the word "the", this effectively confirms the identification with "to", whereas if the succeeding word is "much", "too" becomes a plausible candidate, although "to" remains a possibility (again "two" is effectively eliminated). In order to store information about the frequencies of combination of words, corresponding to the conditional probabilities of such combinations, a multi-dimensional B-tree is required.

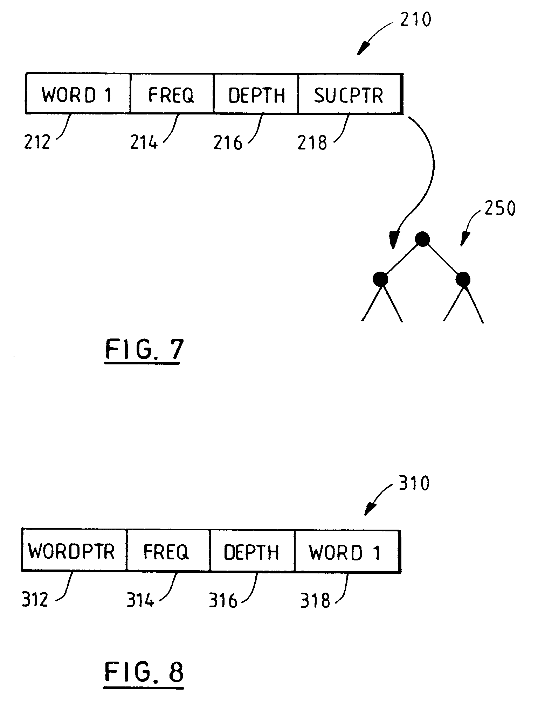

One way of providing such a multi-dimensional B-tree is illustrated in Figure 7. Each node 210 in the main or primary frequency ordered B-tree contains an additional entry SUCPTR, which references another B-tree 250, which is used to store occurrences of words that succeed WORD1, the word represented by the node 210. This secondary B-tree 250 can also be frequency ordered, although the arrangement will be different from that of the main B-tree, since the distribution is conditional on WORD1 being the preceding word. For example, if WORD1 is "too", then words like "much" and "little" will be relatively high in B-tree 250 compared to the main B-tree, whereas "the" will be much lower down.

It is not necessary for the nodes in B-tree 250 to contain the actual values of the words themselves. Rather, they can contain a pointer back to the location of the word in the main B-tree. This is illustrated in Figure 8 in which a node 310 contains a pointer WORDPTR 312 which points to the node in the main B-tree containing the word represented by node 310. The field 318 for storing the actual WORD1 in node 310 is then no longer required and can be omitted if desired. Such an arrangement has the advantage of requiring less storage space, and furthermore effectively chains entries together, so that conditional probabilities for a sequence of words can be obtained without having to go via the route node of the main B-tree each time.

The above scheme can be expanded to handle trigrams, whereby each entry in B-tree 250 references yet another B-tree, containing the distribution of the third word in trigrams starting with the two specified words. The scheme can be extended to even higher dimensions, although the linguistic utility of such higher dimensional structures rapidly decreases. There are many obvious variations on such schemes; for example, the B-tree 250 may contain preceding rather than succeeding words, or the main B-tree to have two dependent B-trees, one of preceding words and one of succeeding words.

Addition of entries to subsidiary trees can either be performed immediately after creation or incrementing of the associated main B-tree node (ie at step 106 or 112 in Figure 4), or alternatively in a separate process after the update to the main B-tree has been completed, together with any necessary node rearrangements. The code of lx_add and the method illustrated in Figure 4 do not directly produce multi-dimensional B-trees. Nevertheless, lx_add does contain the provision to add a pointer (equivalent to WORDPTR in Figure 8) rather than a string to a B-tree, by means of the wordptr" argument. Furthermore, in relation to the test on cmp, the B-tree is produced such that "data" is the component in a node structure containing the actual word value (corresponding to field 316 in Figure 8), whilst "name" is a pointer (corresponding to field 312 in Figure 8). In the main B-tree "name" simply points to itself (or more accurately, the start of the node containing it), whereas in a secondary B-tree "name" points back to the corresponding entry in the main B-tree which actually contains the string for that node. Such features allow lx_add to be readily used in connection with secondary or other subsidiary B-trees.

The use of lx_add produces a B-tree with strict frequency ordering. In some circumstances a slight deviation from such ordering may conceivably provide a slight increase in efficiency if otherwise the tree would become exceedingly unbalanced. Thus the test for whether to adopt conventional balancing could be based for example on the relative difference in frequencies of the nodes concerned being less than some very small percentage. In practice however, given the actual probability distribution of natural language data, extremely satisfactory results have been obtained on the basis of strict frequency ordering (ie frequencies being strictly non-increasing on descending throught the tree), and such an approach is obviously the easiest to implement.

Although the B-trees discussed so far have all been binary, in that each node contains only a single test value, there is no reason why a higher basis B-tree should not be frequency ordered. Thus for example in a ternary B-tree, the top node might contain the test values "of" and "the", with the three dependent nodes containing "and" and "in", "on" and "that", and "to" and "this" respectively. The frequency ordering in this case would have the same advantage in faster access as for a binary B-tree. Likewise, the examples given all relate to an English language B-tree, but the method is obviously also applicable to other languages in which words have a similarly skewed probability distribution (this is so for all natural languages). It is also possible customise the B-tree to reflect the frequency of words in particular specialised areas (eg medicine).

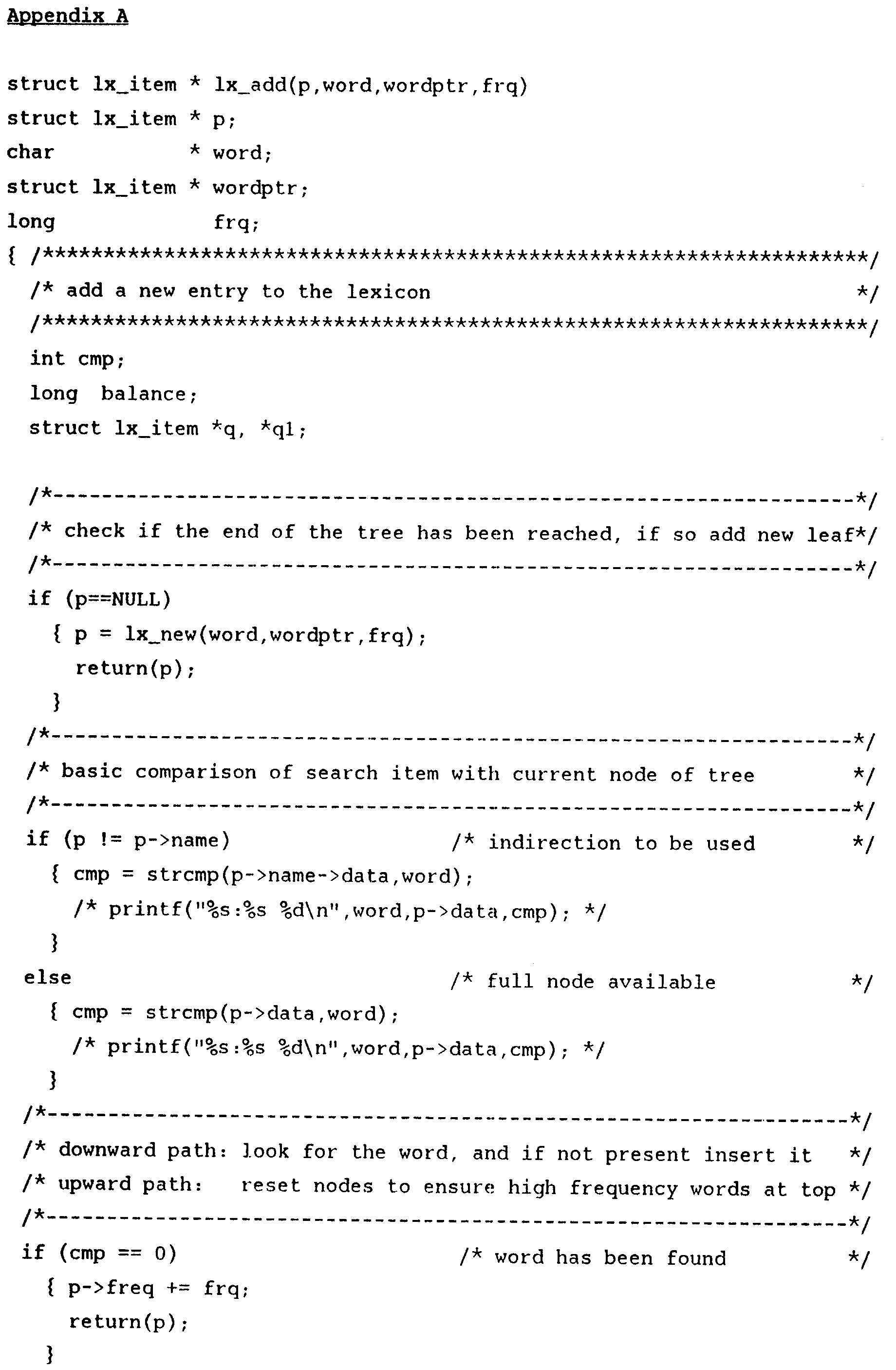

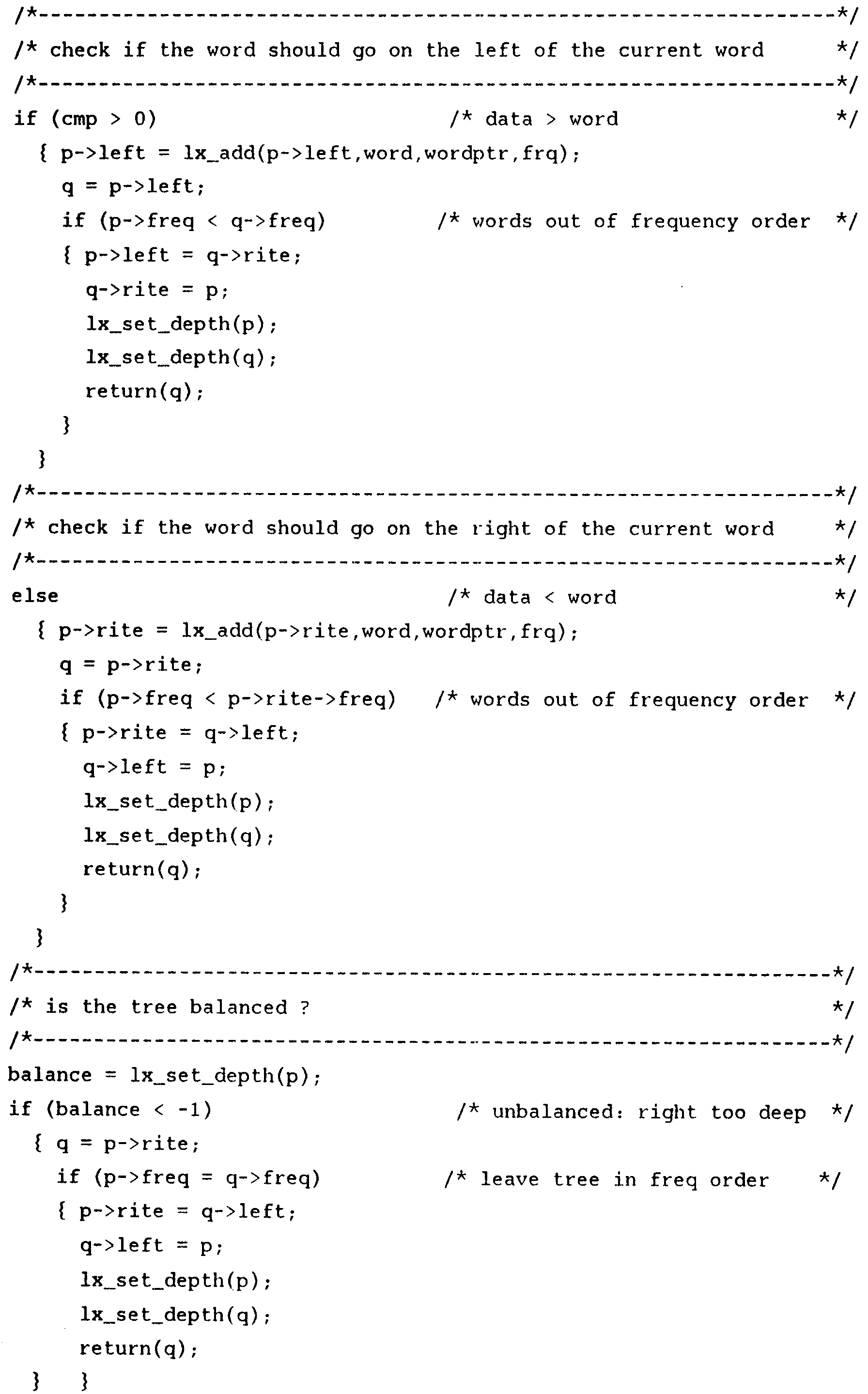

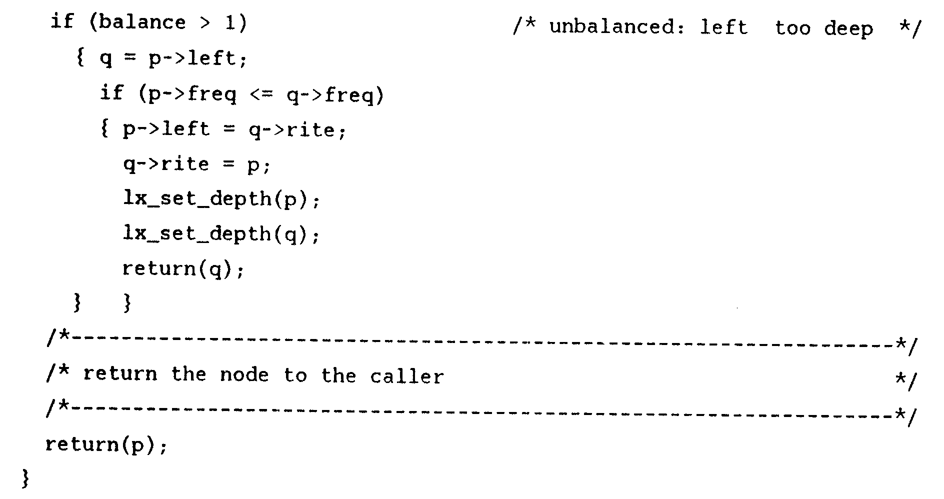

## Claims

1. A natural language processing system including a B-tree (21) formed from a hierarchy of nodes (22, 24, 26), each node containing at least one test word and storing or referencing data associated with the test word(s), and each node (except at the bottom of the hierarchy) referencing a plurality of nodes in the next level down the hierarchy,
and characterised in that the nodes are arranged such that in descending down a branch of the B-tree, the frequency of occurrence in natural language of the test word(s) in the nodes decreases substantially monotonically.

2. A natural language processing system as claimed in claim 1, wherein the B-tree has a binary structure, each node containing a single test value.

3. A natural language processing system as claimed in claim 1 or claim 2, wherein for any pair of first and second nodes having a substantially equal frequency of occurrence in natural language, in which the first node references the second one in the next lower level of the hierarchy, the relative positions of the first and second nodes are arranged to optimise balancing of the tree.

4. A natural language processing system as claimed in any preceding claim, wherein for each test word in a node a secondary B-tree (250) is referenced, the secondary B-tree also being frequency ordered and storing information on the frequency of occurrence in natural language of bigrams containing said test word.

5. A natural language processing system as claimed in claim 4, in which the secondary B-tree stores each test word in the form of a reference back to node in the primary B-tree containing the same test word.

6. A method of creating a B-tree for use in a natural language processing system, the B-tree comprising a hierarchy of nodes, each node containing a test word and storing or referencing data associated with that test word, and each node (except at the bottom of that branch of the hierarchy) referencing a plurality of nodes in the next level down, said method comprising the steps of:
locating a search word within the B-tree, and if a node is found whose test word matches the search word, modifying the data for that node, and if the search word is not found, adding a new node having the search word for its test word at the bottom of the B-tree; and
returning out of the tree from the matched or newly added node by ascending a level at a time, and at each level comparing the current node with the node just ascended from according to predetermined criteria, and if said predetermined criteria are met, rearranging the branch of the tree containing said current node,
and characterised in that said predetermined criteria comprise whether the frequency of occurrence in natural language of the test word of the current node is less than that of the test word in the node just ascended from.

7. A method as claimed in claim 6, wherein if the frequency of occurrence in natural language of the test word of the current node and of the test word of the node just ascended from are substantially equal, said predetermined criteria further comprise the disparity between the relative depths of the different branches depending from the current node.
